Europäisches Patentamt

European Patent Office

Office européen des brevets

(19)

(11) Publication number: **0 169 419**
**B1**

(12) **EUROPEAN PATENT SPECIFICATION**

(45) Date of publication of patent specification: 02.11.88

(51) Int. Cl.⁴: **B 25 J 17/02, B 25 J 9/14**

(21) Application number: 85108356.8

(22) Date of filing: 05.07.85

(54) Improved pneumatic robot wrist.

(30) Priority: 27.07.84 US 635374

(43) Date of publication of application:
29.01.86 Bulletin 86/05

(45) Publication of the grant of the patent:
02.11.88 Bulletin 88/44

(84) Designated Contracting States:
DE FR GB IT SE

(56) References cited:
FR-A-2 213 212
FR-A-2 440 270

(73) Proprietor: **UNIMATION INC.**
**Shelter Rock Lane**
**Danbury Connecticut 06810 (US)**

(72) Inventor: **Antoszewski, Richard Stanley**
**212 Highlander Heights Drive**
**Glenshaw Pennsylvania 15116 (US)**
Inventor: **Garin, John**
**P.O. Box 203**
**Hawleyville Connecticut 06440 (US)**

(74) Representative: **Patentanwälte Dipl.-Ing. R.**
**Holzer Dipl.-Ing. (FH) W. Gallo**
**Philippine-Welser-Strasse 14**
**D-8900 Augsburg (DE)**

Courier Press, Leamington Spa, England.

## Description

### Background of the invention

Manipulator apparatus, often referred to as part of robot systems, have found widespread acceptance in numerous assembly applications. The accuracy and reliability of such applications depend to a significant extent on the accuracy and repeatability of the wrist which controls the positioning the end-effector, i.e., gripper.

FR—A—2 213 212 discloses a manipulator apparatus having one or more arms attached to a vertical column which is provided for rotational and vertical movement. The or each arm supports an end-effector and is provided for translational movement in either direction. The column is mounted on a rotatable base plate which may be rotated through a bevel gear set. The column comprises a pneumatic cylinder mounted to said base plate, and a vertically moveable member attached to a movable rod and piston combination of said pneumatic cylinder assembly. The or each arm is attached to the movable portion of the column and comprises a double acting pneumatic cylinder assembly including a cylinder attached to said movable column portion and defining two pneumatic chambers at opposite sides of a piston which form part of a movable rod and piston assembly, said rod having said end-effector attached to one of its ends. By varying the pneumatic pressure in the two chambers, the rod together with the end-effector is longitudinally movable in either direction.

It is the object of the present invention to provide an improved pneumatic wrist apparatus in the form of a unitary structure providing both rotational and translational movement of an end-effector.

### Summary of the invention

Accordingly, the present invention resides in a pneumatic wrist apparatus for a robotic structure, comprising

a tubular linear bearing assembly having an internal linear bearing sleeve,

a quill assembly including a closed end tubular quill member disposed coaxially about a stationary rod and piston combination, said quill member defining a pair of isolated pneumatic chambers at opposite sides of the piston and being slidably movable relative to said rod and piston combination and within said linear bearing sleeve,

means for varying the pneumatic pressure within said pneumatic chambers to effect movement of said quill member in one direction or in the opposite direction, respectively,

rotational drive means coupled to said tubular linear bearing assembly to impart rotational motion to the combination of said linear bearing assembly and said quill member about said rod and piston combination, and

an end-effector support means coupled to one end of said quill member.

### Description of the drawings

The invention will become more readily apparent from the following exemplary description to be read in conjunction with the accompanying drawings in which:

Figure 1 is a pictorial illustration of a manipulator apparatus including a pneumatic wrist assembly in accordance with the invention;

Figure 2 is a sectioned illustration of the pneumatic wrist assembly of Figure 1 and the robot arm supporting the wrist assembly; and

Figure 3 is a sectioned illustration along the lines A—A of Figure 2.

### Description of the preferred embodiment

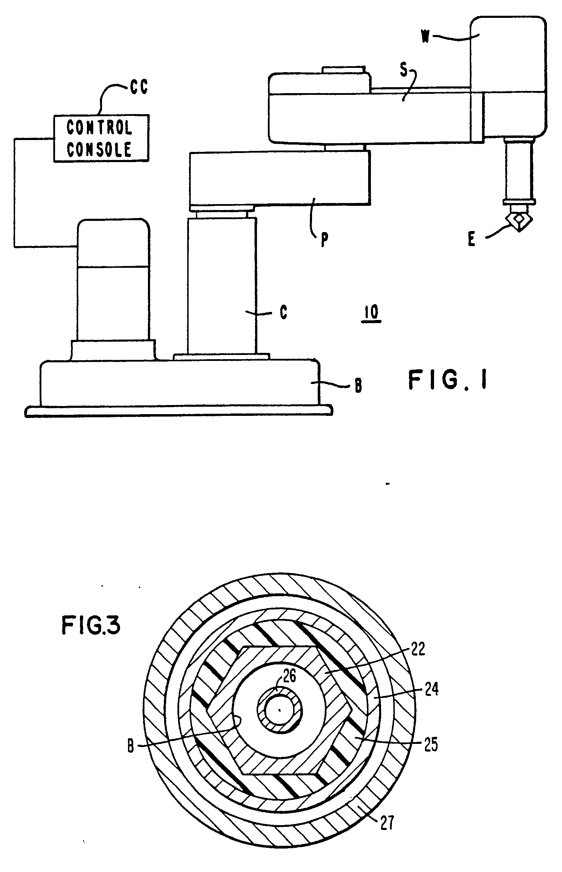

Referring to Figure 1 there is illustrated a conventional manipulator apparatus 10 comprising a base assembly B including drive motors M and a vertical column C supporting a primary arm assembly P from which is extended a secondary arm assembly S. A modular wrist W in combination with an end effector E is affixed to the secondary arm assembly S. The operation of the manipulator apparatus 10 is controlled from the control console CC. The rotational motion of the primary arm assembly P and the secondary arm assembly S is controlled by the drive motors M and a drive arrangement coupling the drive motors M through the base assembly B and the column C.

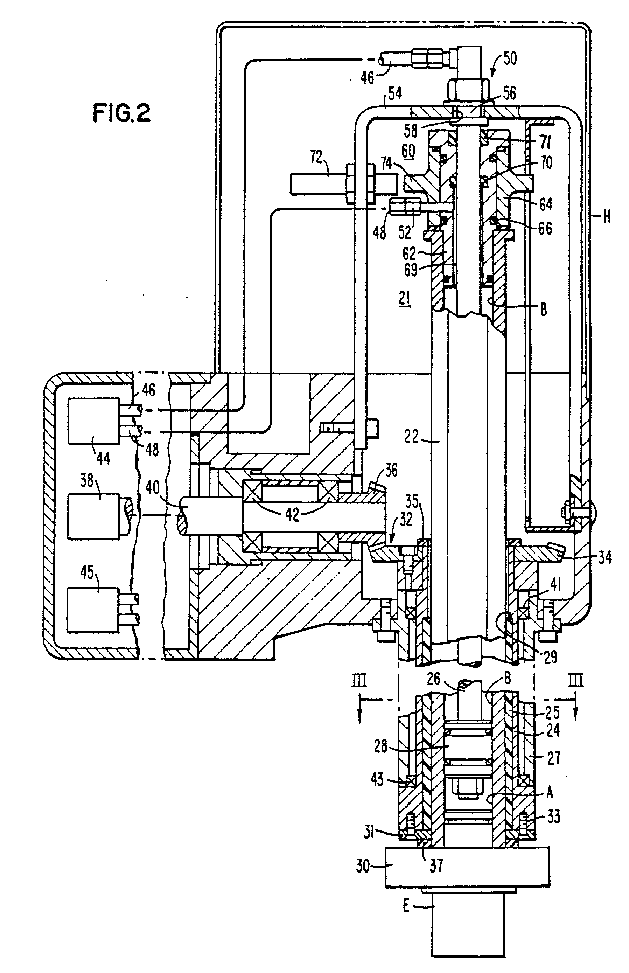

While there are numerous techniques for implementing the operation of the wrist assembly W to effect movement and operation of the end effector E, the pneumatic wrist assembly illustrated in detail in Figures 2 and 3 depicts a relatively simple, efficient and reliable wrist assembly configuration.

The pneumatically actuated wrist assembly 20 of Figure 2 includes a tubular assembly 21 having a quill 22 positioned for vertical movement within a tubular linear bearing assembly 24 in response to pressure changes in chambers A and B defined by the stationary combination of the tubular rod 26 and piston 28. The end effector mounting plate 30 is secured to the movable quill 22 and supports the end effector E, i.e., gripper, etc. The rotational movement of the quill 22 about the tubular rod 26 is accomplished by the bevel gear set 32 consisting of a ring gear 34 secured to the tubular bearing assembly 24 and a pinion gear 36 operatively coupled to a DC servomotor 38 by the drive shaft, or torque tube, 40. The pinion gear 36 responds to the DC servomotor 38 by imparting rotation to the assembly 21 via the ring gear 34. The duplex bearing 42 supports the drive shaft 40 and functions to axially retain the bevel gear set 32. This permits adjustment to the running clearance in the gear set 32 so as to both minimize backlash in the wrist axis drive train and compensate for wear in the gearing.

The four way solenoid valve 44 secured within the secondary arm S of the robot 10 controls the pneumatic pressure in chambers A and B of the assembly 21 by controlling a flow of air through tubes 46 and 48. Air tube 46 is connected through fitting 50 to the tubular rod 26 to introduce air pressure in chamber A thereby increasing the volume of the chamber and moving the assembly 21 and its associated end effector support plate 30 downward toward an assembly work station WS. Air supplied through tube 48, which is connected through fitting 52, introduces air pressure within chamber B via passage 69 with the resulting increase in volume of chamber B causing the assembly 21 to move upward, or away from the assembly work station WS. A second four way solenoid valve 45, positioned within the secondary arm S of Figure 2, provides pneumatic control to the end effector E.

The assembly 21 is supported within the housing H of the wrist assembly W by a mounting bracket 54 and the interconnect 50. A shoulder 56 at the end of the rod 26 extending through the aperture 58 of the mounting plate 54 permites the tubular rod 26 to be self aligning and float on the seals within the assembly adapter 60 of the assembly 21. This feature reduces the effects of friction, eliminates side load and provides for smooth operation.

The assembly adapter 60 includes a rotatable sleeve, or gland member, 62 to which the assembly 21 is attached. The sleeve 62 is secured for rotation within a nonrotatable housing member 64 by the seals 66. The air introduced into the chamber B via the passage 69 between the tubular rod 26 and the sleeve 62 is prevented from exiting the assembly 60 by the seals 70 and 71. The end of travel vertical movement of the assembly 21 is monitored by end of travel proximity switch 72 sensing the shoulder extension 74 of the housing 64.

The angular contact, adjustable preload bearings 41 and 43 supports rotation of the assembly 21 and linear bearing assembly 24 within the tubular housing 29 in response to the DC servomotor 38. The substantial vertical spacing of the bearings 41 and 43 minimizes horizontal deflections of the quill assembly 21 by increasing its rigidity and providing resistance to side loads encountered during high rates of acceleration/deceleration and assembly insertion operations. This enhances the reliability, accuracy and stability of the end effector E.

Referring to Figure 3 there is illustrated a sectioned view of the quill 22 slidably positioned within the tubular linear bearing assembly 24. The tubular quill 22 and the tubular linear bearing assembly 24 are coaxially disposed about the tubular rod 26. The quill, which is typically constructed of steel, is illustrated as having a circular inner surface and a hexagonal outer surface. The linear bearing assembly 24 is illustrated as consisting of a tubular linear bearing 25 having a hexagonal inner surface and a circular outer surface and positioned within a tubular steel tube 27. The tubular linear bearing 25, which is composed of a Teflon (registered trade mark) impregnated nylon sleeve composition wrapped with fiberglass filament, is commercially available under the tradename "Duralon" from the Rex- nord Bearing Company. The linear bearing composition permits low friction vertical movement of the quill 22 while affording vertical stability to the quill assembly 21 responding to vertical pneumatic positioning from the four way solenoid valve 44. The hexagonal configuration provides rotational stability and essentially serves as a drive key between the quill 22 and the linear bearing 25. It is obvious that a similar keying function could be realized through configurations other than the hexagonal embodiment illustrated.

The tubular linear bearing 25 is secured against the internal shoulder 29 of the tubular steel member 27, as illustrated in Figure 2, by the retaining ring 31 which is affixed to the tubular member 27 by mounting screws 33. Elastomer rings 35 and 37 positioned at either end of the tubular housing member 27 provide end of travel mechanical stops, or cushions, for the vertical movement of the assembly 21.

## Claims

1. A pneumatic wrist apparatus for a robotic structure, comprising

a tubular linear bearing assembly (24) having an internal linear bearing sleeve (25),

a quill assembly (21) including a closed end tubular quill member (22) disposed coaxially about a stationary rod and piston combination (26, 28), said quill member defining a pair of isolated pneumatic chambers (A, B) at opposite sides of the piston (28) and being slidably movable relative to said rod and piston combination and within said linear bearing sleeve (25),

means for varying the pneumatic pressure within said pneumatic chambers (A, B) to effect movement of said quill member (22) in one direction or in the opposite direction, respectively,

rotational drive means (32, 38) coupled to said tubular linear bearing assembly (24) to impart rotational motion to the combination of said linear bearing assembly and said quill member (22) about said rod and piston combination (26, 28), and

an end-effector support means (30) coupled to one end of said quill member (22).

2. An apparatus as claimed in claim 1, wherein said rotational drive means includes a bevel gear set (32) having a ring gear (34) affixed to said tubular linear bearing assembly (24) and an engaging pinion gear (36) coupled to a drive means (38) for controlling said rotational motion.

3. An apparatus as claimed in claim 2, wherein said drive means includes a DC servo motor (38), a drive shaft (40) connecting said DC servo motor to said pinion gear (36), and a duplex bearing (42) for supporting said drive shaft.

4. An apparatus as claimed in any of claims 1 to 3, wherein said internal linear bearing sleeve (25) is composed of a Teflon impregnated nylon sleeve composition wrapped with fiberglass filament.

5. An apparatus as claimed in any of claims 1 to 4, wherein the internal surface of said linear bearing sleeve (25) and the mating external surface of said quill member (22) are of a geometry so as to prevent rotational movement of the linear bearing sleeve relative to said quill member.

6. An apparatus as claimed in claim 5, wherein the internal surface of said linear bearing sleeve (26) and the mating external surface of said quill member (22) are hexagonal.

7. An apparatus as claimed in any of claims 1 to 6, wherein said quill member (22) has secured to its end opposite said end-effector support means (30) an adapter means (60) having a tubular nonrotatable adapter housing (64) and an internal rotatable gland sleeve (62), said stationary rod (26) extending through said gland sleeve (62) and being a tubular member, and said means for varying the pneumatic pressure including means (46) for introducing pneumatic fluid into said first chamber (A) through said tubular rod (26), and means (48, 52) for introducing pneumatic fluid into said second chamber (B) through a passage defined in said adapter means (60).

8. An apparatus as claimed in claim 7, wherein said means for varying the pneumatic pressure includes a four-way solenoid valve (44) for controlling the supply of air to said first and second chambers (A, B).

9. An apparatus as claimed in claim 7 or 8, further including a wrist assembly housing (H) supporting said tubular linear bearing assembly (24), and a mounting bracket (54) having an aperture (58) therein being secured within said housing for supporting said quill assembly (21), said stationary rod (26) exiting said gland sleeve (62) extending through said aperture (58) in a loose fit relationship to permit self-aligning of the wrist assembly in order to minimize side load effects and provide for smooth operation.

**Patentansprüche**

1. Pneumatische Handgelenkvorrichtung für Roboter, mit

einer rohrförmigen Schiebeführungsbaugruppe (24) mit einer inneren Schiebeführungshülse (25),

einer Zylinderbaugruppe (21) mit einem stirnseitig geschlossenen rohrförmigen Zylinderbauteil (22), das koaxial um eine feststehende Anordnung aus Kolben und Kolbenstange (26, 28) angeordnet ist und zwei voneinander getrennte Pneumatikkammern (A, B) beiderseits des Kolbens (28) bildet sowie relativ zu der Anordnung aus Kolben und Kolbenstange und innerhalb der Schiebeführungshülse (25) verschiebbar ist,

Mitteln zur Veränderung des Pneumatikdruckes innerhalb der Pneumatikkammern (A, B) zum Erzeugen einer Bewegung des Zylinderbauteils (22) in der einen oder anderen Richtung,

Drehantriebsmitteln (32, 38), die mit der rohrförmigen Schiebeführungsbaugruppe (24) gekuppelt sind und der Kombination aus der Schiebeführungsbaugruppe und dem Zylinderbauteil (22) eine Drehbewegung um die Anordnung aus Kolben und Kolbenstange (26, 28) mitteilen, und einem mit einem Ende des Zylinderbauteils (22) verbundenen Arbeitskopfhalter (30).

2. Vorrichtung nach Anspruch 1, wobei die Drehanstriebsmittel einen Kegelradsatz (32) mit einem an der rohrförmigen Schiebeführungsbaugruppe (24) befestigten Ringrad (34) und einem damit in Eingriff stehenden Ritzel (36) aufweisen, das mit einem Antriebsorgan (38) zur Steuerung der Drehbewegung gekuppelt ist.

3. Vorrichtung nach Anspruch 2, wobei die Antriebsmittel einen Gleichstrom-Servomotor (38), eine den Gleichstrom-Servomotor mit dem Ritzel (36) verbindende Antriebswelle (40), und ein Duplex-Lager (42) zur Lagerung der Antriebswelle aufweisen.

4. Vorrichtung nach einem der Ansprüche 1 bis 3, wobei die innere Schiebeführungshülse (25) aus einer Teflon-imprägnierten, mit Glasfaserfäden umwickelten Nylonhülsenzusammensetzung besteht.

5. Vorrichtung nach einem der Ansprüche 1 bis 4, wobei die Innenfläche der Schiebeführungshülse (25) und die entsprechende Außenfläche des Zylinderbauteils (22) eine Geometrie haben, die eine Drehbewegung der Schiebeführungshülse relativ zum Zylinderbauteil verhindert.

6. Vorrichtung nach Anspruch 5, wobei die Innenfläche der Schiebeführungshülse (26) und die entsprechende Außenfläche des Zylinderbauteils (22) hexagonal sind.

7. Vorrichtung nach einem der Ansprüche 1 bis 6, wobei an dem bezüglich des Arbeitskopfhalters (30) gegenüberliegenden Ende des Zylinderbauteils (22) ein Adapter (60) mit einem rohrförmigen, nicht drehbaren Adaptergehäuse (64) und einer inneren drehbaren Dichtungshülse (62) befestigt ist, die als rohrförmiges Bauteil ausgebildet ist und durch welche die feststehende Kolbenstange (26) hindurchverläuft, und wobei die Mittel zur Veränderung des Pneumatikdruckes Mittel (46) zum Einleiten von Pneumatikmittel in die erste Kammer (A) durch die rohrförmige Kolbenstange (26) und Mittel (48, 52) zum Einleiten von Pneumatikmittel in die zweite Kammer (B) durch einen in dem Adapter (60) gebildeten Kanal aufweisen.

8. Vorrichtung nach Anspruch 7, wobei die Mittel zur Veränderung des Pneumatikdruckes ein Vierwege-Elektromagnetventil (44) zur Steuerung der Luftzufuhr in die erste und zweite Kammer (A, B) aufweisen.

9. Vorrichtung nach Anspruch 7 oder 8, mit einem Gelenkbaugruppengehäuse (H), das die rohrförmige Schieberführungsbaugruppe (24) haltert, und wobei an dem Gehäuse ein Montagebügel (54) mit einer Öffnung (58) zur Halterung der Zylinderbaugruppe (21) befestigt ist und die aus der Dichtungshülse (62) herausragende feststehende Kolbenstange (26) mit einer Spielpassung durch die Öffnung (58) hindurchragt, um eine Selbstausrichtung der Handgelenkbaugruppe zwecks Minimierung von Querlasteinflüssen und für eine ruckfreie Funktion zu ermöglichen.

## Revendications

1. Appareil à poignet pneumatique pour une structure robotique, comprenant:

—un ensemble (24) de support linéaire tubulaire ayant un manchon (25) de support linéaire interne;

—un corps creux (21) comprenant une pièce creuse tubulaire (22) fermée à ses extrémités, disposée coaxialement autour d'une combinaison fixe de tige et de piston (26, 28), ladite pièce creuse définissant une paire de chambres pneumatiques (A, B) isolées sur les côtés opposés du piston (28), et étant mobiles de façon coulissante par rapport à ladite combinaison de tige et de piston, et situées à l'intérieur dudit manchon (25) de support linéaire;

—des moyens pour faire varier la pression pneumatique à l'intérieur desdites chambres (A, B), pour effectuer le mouvement de ladite pièce creuse tubulaire (22) dans un sens ou dans le sens opposé, respectivement;

—des moyens (32, 38) de commande de rotation couplés audit ensemble (24) de support linéaire tubulaire, pour communiquer un mouvement de rotation à la combinaison dudit ensemble de support linéaire et de ladite pièce creuse tubulaire (22) autour de la combinaison de tige et de piston (26, 28); et

—des moyens (30) de support d'un exécutant d'extrémité couplé à une extrémité de ladite pièce creuse tubulaire (22).

2. Appareil selon la revendication 1, dans lequel lesdits moyens d'entraînement par rotation comportent un système (32) d'engrenages coniques ayant une couronne dentée (34) fixée audit ensemble (24) de support linéaire tubulaire et un pignon d'attaque (36), accouplé à des moyens (38) d'entraînement pour commander ledit mouvement de rotation.

3. Appareil selon la revendication 2, dans lequel lesdits moyens d'entraînement comportent un servo-moteur (38) à courant continu, un arbre (40) d'entraînement connectant ledit moteur à courant continu audit pignon (36), et un support double (42) pour supporter ledit arbre d'entraînement.

4. Appareil selon selon l'une quelconque des revendications 1 à 3, dans lequel ledit manchon (25) de support linéaire interne est composé d'un manchon en Nylon imprégné de Téflon et enveloppé par un filament de fibre de verre.

5. Appareil selon selon l'une quelconque des revendications 1 à 4, dans lequel la surface interne dudit manchon (25) de support linéaire et la surface externe correspondante de ladite pièce creuse (22) sont d'une forme géométrique telle que celle-ci empêche un mouvement de rotation du manchon de support linéaire par rapport à ladite pièce creuse.

6. Appareil selon la revendication 5, dans lequel la surface interne dudit manchon (25) de support linéaire et la surface externe correspondante de ladite pièce creuse sont hexagonales.

7. Appareil selon selon l'une quelconque des revendications 1 à 6, dans lequel sur ladite pièce creuse (22) est fixé, à l'extrémité de celle-ci opposée audit moyen (30) de support de l'exécutant d'extrémité, un adaptateur (60), ayant un boîtier tubulaire (64) ne pouvant pas tourner et un manchon interne (62) presse-étoupe pouvant tourner, ladite tige fixe (26) s'étendant à travers ledit manchon (62) presse-étoupe et étant constituée d'une pièce tubulaire, et lesdits moyens pour faire varier la pression pneumatique comportant des moyens (46) pour introduire un fluide pneumatique dans ladite première chambre (A) par ladite tige tubulaire (26), et des moyens (48, 52) pour introduire un fluide pneumatique dans ladite seconde chambre (B) par un passage défini dans ledit adaptateur (60).

8. Appareil selon la revendication 7, dans lequel lesdits moyens pour faire varier la pression comportent une électrovalve (44) à quatre voies pour commander l'alimentation en air comprimé auxdites première et seconde chambres (A, B).

9. Appareil selon les revendications 7 ou 8, comprenant de plus une enveloppe (H) d'ensemble de poignet, supportant ledit ensemble (24) de support linéaire tubulaire, et un support (54) de montage ayant une ouverture (58) et dans lequel est fixée ladite enveloppe pour supporter ledit corps creux (21), ladite tige fixe (26) émergeant dudit manchon (62) presse-étoupe et s'étendant à travers ladite ouverture (58) avec du jeu, afin de permettre l'auto-alignement de l'ensemble de poignet, en vue de minimiser les effets latéraux de charge et de permettre un fonctionnement sans à-coups.

0 169 419

FIG. 1

FIG.3

**FIG.2**